# EUROPÄISCHE PATENTANMELDUNG

(11) **EP 4 759 734 A1**
(43) Veröffentlichungstag der Anmeldung: **17.06.2026**
(21) Anmeldenummer: 25221685.8
(22) Anmeldetag: 09.12.2025
(51) Int. Cl.: B65B 7/16, B29C 65/00, B65B 31/00, B65B 51/14

(54) **SIEGELWERKZEUG UND VERFAHREN ZUM VERSIEGELN VON VERPACKUNGEN**

(30) Priorität: 13.12.2024 DE 102024137608
(71) Anmelder: MULTIVAC Sepp Haggenmüller SE & Co. KG, 87787 Wolfertschwenden (DE)
(72) Erfinder: FACKLER, Sebastian, 87724 Ottobeuren (DE); FÜRGUT, Helena, 87730 Bad Grönenbach (DE)
(74) Vertreter: Grünecker Patent- und Rechtsanwälte PartG mbB

(57) **Zusammenfassung**

Ein Siegelwerkzeug (10) zum Versiegeln von Verpackungen (14) durch Verbinden einer Deckfolie (5) mit einem Behälter (4), wobei das Siegelwerkzeug (10) ein Werkzeugunterteil (13) und ein Werkzeugoberteil (12) umfasst. Das Werkzeugoberteil (12) umfasst eine beheizbare Siegelplatte (17) und eine Produktschutzplatte (20), wobei die Siegelplatte (17) dazu konfiguriert ist, die Deckfolie (5) an den Behälter (4) zu siegeln, und wobei die Produktschutzplatte (20) dazu konfiguriert ist, die Deckfolie (5) wenigstens teilweise in eine Öffnung (6) des Behälters (4) hinein zu wölben.

## Beschreibung

Die Erfindung bezieht sich auf Siegelwerkzeuge zum Versiegeln von Verpackungen, auf Verpackungsmaschinen sowie auf Verfahren zum Betreiben solcher Siegelwerkzeuge und Verpackungsmaschinen.

Siegelwerkzeuge und Verpackungsmaschinen sind bspw. aus der DE 10 2021 110 382 A1 bekannt. Oft werden eine Schale und eine Deckfolie durch Hitze miteinander verschweißt. Viele Siegelwerkzeuge enthalten zu diesem Zweck eine Siegelplatte, die erwärmt wird. Um zu verhindern, dass unnötig viel Wärmestrahlung von der Siegelplatte an in der Schale befindliche Produkte abgegeben wird, werden in einigen Siegelwerkzeugen, wie z. B. dem in der DE 10 2021 110 382 A 1 offenbarten, Produktschutzplatten vorgesehen. Produktschutzplatten werden vollständig in eine Vertiefung in der Siegelplatte aufgenommen, sodass Flächen der Siegelplatte, die nicht zum Siegeln benötigt werden, abgedeckt sind und eine Siegelfläche der Siegelplatte nicht durch die Produktschutzplatte abgedeckt wird. Solche Konfigurationen werden herkömmlich genutzt, um besonders hitzeempfindliche oder tiefgekühlte Produkte beim Verpacken von der Wärmestrahlung der aufgeheizten Siegelplatte abzuschirmen.

Siegelwerkzeuge werden außerdem häufig eingesetzt, um Verpackungen vor dem Versiegeln zu evakuieren und/oder mit einem Austauschgas zu befüllen. Diese Prozesse können bei manchen Verpackungsfüllungen zu Problemen führen. Bspw. kann eine Evakuierung der Verpackung bei heißen Suppen dazu führen, dass diese aufgrund des verringerten Drucks aufkochen und das Werkzeug und die Verpackung kontaminieren. Gelangt Füllgut auf Oberflächen, die zum Erzeugen der Siegelnaht vorgesehen sind, kann auch das Versiegeln beeinträchtigt werden. Wird in solchen Fällen die Verpackung jedoch weder evakuiert noch mit Austauschgas befüllt, kommt es häufig zu aufgeblähten Verpackungen, da in der versiegelten Verpackung verbliebene Luft durch das heiße Produkt erwärmt wird und sich ausdehnt. Aufgeblähte Verpackungen weisen bei der weiteren Verarbeitung Nachteile auf. Sie sind bspw. schlechter Stapelbar und behindern das Anbringen von Deckeln. Zwar können Aufblähungen zum Teil reversibel sein, wenn das Produkt abkühlt. Das Abkühlen beansprucht jedoch Zeit und/oder zusätzliche Energie.

Es ist eine Aufgabe der Erfindung, ein verbessertes Siegelwerkzeug anzugeben, das eine effiziente Weiterverarbeitung der erzeugten Verpackungen unterstützt. Diese Aufgabe wird gelöst durch ein Siegelwerkzeug mit den Merkmalen des Anspruchs 1. Vorteilhafte Weiterbildungen sind in den abhängigen Ansprüchen angegeben.

Es wird ein Siegelwerkzeug zum Versiegeln von Verpackungen durch Verbinden einer Deckfolie mit einem Behälter offenbart. Das Siegelwerkzeug umfasst ein Werkzeugunterteil und ein Werkzeugoberteil, wobei das Werkzeugoberteil eine beheizbare Siegelplatte und eine Produktschutzplatte umfasst. Die Siegelplatte ist dazu konfiguriert, die Deckfolie an den Behälter zu siegeln, und die Produktschutzplatte ist dazu konfiguriert, die Deckfolie wenigstens teilweise in eine Öffnung des Behälters hinein zu wölben.

Durch das Wölben der Deckfolie in die Öffnung des Behälters hinein kann die Luftmenge in der versiegelten Verpackung reduziert werden, ohne dass die Verpackung evakuiert werden muss. Durch die reduzierte Luftmenge in der versiegelten Verpackung kann ein Aufblähen der Verpackung reduziert oder verhindert werden. Als ein Behälter kann bspw. eine Schale, ein Becher, eine in eine Folie geformte Mulde oder jegliche Struktur angesehen werden, die dazu konfiguriert ist, Produkte durch Einfüllen in eine Öffnung des Behälters aufzunehmen und durch Abdecken der Öffnung, bspw. mit einer Deckfolie, gasdicht versiegelt zu werden. Das Werkzeugunterteil kann dazu konfiguriert sein, den Behälter aufzunehmen.

Das Werkzeugunterteil und das Werkzeugoberteil können dazu konfiguriert sein in einer Schließrichtung des Siegelwerkzeugs aufeinander zu bewegt zu werden. Dadurch kann das Siegelwerkzeug von einer geöffneten Position in eine geschlossene Position bewegbar sein. Durch Bewegen in eine entgegengesetzte Richtung können das Werkzeugunterteil und das Werkzeugoberteil voneinander fort bewegbar sein. Dadurch kann das Siegelwerkzeug von der geschlossenen Position in die geöffnete Position bewegbar sein. Die Schließrichtung wie auch die entgegengesetzte Richtung können jeweils orthogonal zu der Deckfolie orientiert sein.

Vorzugsweise kann die Produktschutzplatte dazu konfiguriert sein, die Deckfolie in eine Öffnung des Behälters hinein zu wölben bevor die Deckfolie mit dem Behälter verbunden wird. Alternativ oder zusätzlich kann die Produktschutzplatte dazu konfiguriert sein, die Deckfolie in eine Öffnung des Behälters hinein zu wölben während die Deckfolie mit dem Behälter verbunden wird. Bspw. kann die Produktschutzplatte über eine Siegelfläche der Siegelplatte hinausragen, z. B. in einer Richtung, die parallel zu der Schließrichtung des Siegewerkzeugs orientiert ist und vorzugsweise zu der Deckfolie hin weist. Dadurch kann es ermöglicht werden, dass beim Schließen des Siegelwerkzeugs die Produktschutzplatte mit der Deckfolie eingreift, bspw. die Deckfolie in die Öffnung des Behälters hinein wölbt und/oder drückt, bevor die Siegelfläche der Siegelplatte mit der Deckfolie in Kontakt kommt. Es kann des Weiteren ermöglicht werden, dass beim Schließen des Siegelwerkzeugs die Produktschutzplatte mit der Deckfolie eingreift, bspw. die Deckfolie in die Öffnung des Behälters hinein wölbt und/oder drückt, während und/oder so lange die Siegelfläche der Siegelplatte mit der Deckfolie in Kontakt ist bzw. während und/oder so lange die Deckfolie an den Behälter gesiegelt wird.

Die Produktschutzplatte kann z. B. einen Vorsprung aufweisen, der dazu konfiguriert sein kann, die Deckfolie wenigstens teilweise in die Öffnung des Behälters hinein zu wölben. Der Vorsprung kann über eine Siegelfläche der Siegelplatte hinausragen, z. B. in einer Richtung, die parallel zu der Schließrichtung des Siegewerkzeugs orientiert ist und vorzugsweise zu der Deckfolie hin weist, wie bereits zuvor mit Bezug auf die Siegelplatte erläutert. Alternativ oder zusätzlich zu einem Vorsprung kann die Produktschutzplatte dazu konfiguriert sein, ein Medium, bspw. Druckluft, in Richtung auf die Deckfolie zu zu fördern, bspw. zu blasen.

Die Produktschutzplatte und/oder der Vorsprung kann um mindestens 1 mm über eine Siegelfläche der Siegelplatte hinausragen. Alternativ oder zusätzlich kann die Produktschutzplatte und/oder der Vorsprung um höchstens 20 mm über eine Siegelfläche der Siegelplatte hinausragen.

Die Erfindung bezieht sich auch auf eine Verpackungsmaschine mit einer Siegelstation, wobei die Siegelstation ein Siegelwerkzeug der vorstehend beschriebenen Art umfasst.

Die Erfindung bezieht sich auch auf ein Verfahren zum Betreiben eines Siegelwerkzeugs der vorstehend beschriebenen Art oder zum Betreiben einer Verpackungsmaschine der vorstehend beschriebenen Art, wobei das Verfahren ein Siegeln der Deckfolie an den Behälter ohne vorheriges Evakuieren des Behälters und/oder des Siegelwerkzeugs umfassen kann.

Zusätzlich oder alternativ kann das Verfahren ein Abwarten einer Wartezeit zwischen einem Wölben der Deckfolie in den Behälter hinein durch die Produktschutzplatte und einem Siegeln der Deckfolie an den Behälter umfassen. Dadurch kann der restlichen Luft in der noch nicht verschlossenen Verpackung Zeit zum Aufnehmen von Wärmeenergie gegeben werden. Wird die Luft erwärmt bevor die Deckfolie an den Behälter gesiegelt wird, kann durch temperaturbedingte Volumenausdehnung weitere Luft aus der noch unverschlossenen Verpackung entweichen. Dadurch kann die in der verschlossenen Verpackung verbleibende Luftmenge geringer sein und bereits näher an dem Temperaturniveau des Produkts sein, sodass die verschlossene Verpackung weniger stark aufgebläht wird.

Zusätzlich oder alternativ kann das Verfahren ein Siegeln der Deckfolie an den Behälter, während die Deckfolie wenigstens teilweise in die Öffnung des Behälters hinein gewölbt ist, umfassen.

Die Erfindung bezieht sich auf ein Siegelwerkzeug, eine Verpackungsmaschine sowie auf ein Verfahren der vorstehend beschriebenen Art. Im Folgenden wird eine Ausführung beispielhaft anhand von Zeichnungen näher erläutert.
Fig. 1 zeigt eine perspektivische, schematische Ansicht einer Verpackungsmaschine.
Fig. 2 zeigt eine schematische Schnittansicht eines Siegelwerkzeugs aus der Verpackungsmaschine aus Figur 1, wobei das Siegelwerkzeug in einer geöffneten Position angeordnet ist.
Fig. 3 zeigt die schematische Schnittansicht aus Figur 2, wobei das Siegelwerkzeug in einer geschlossenen Position angeordnet ist.

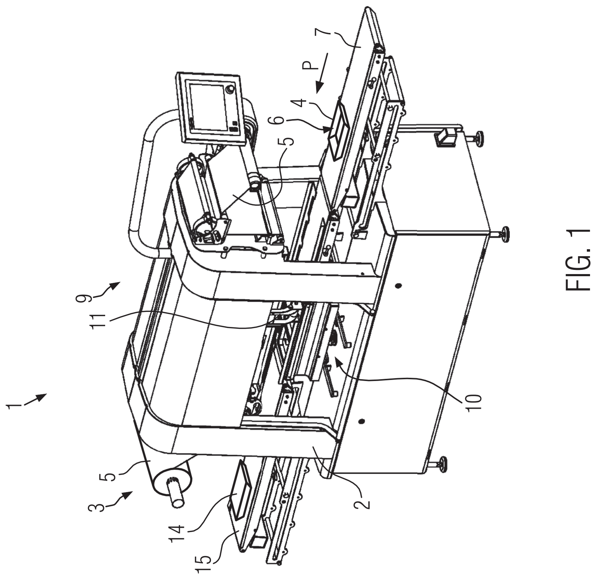

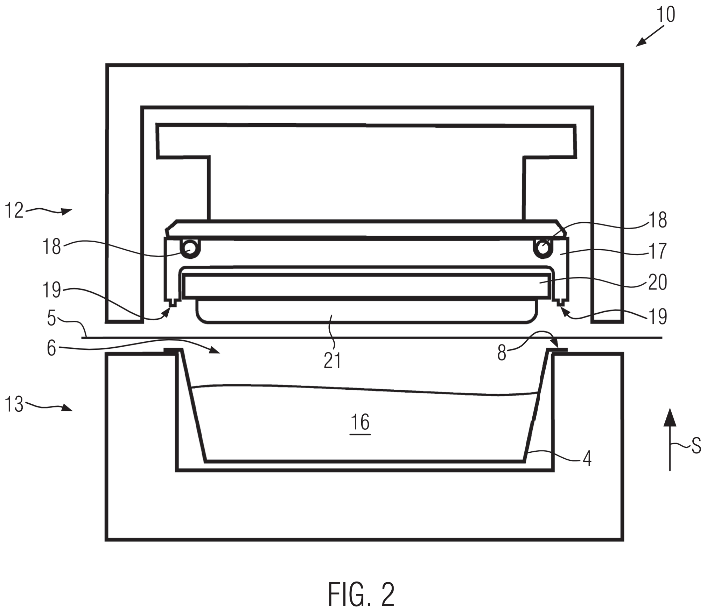

Figur 1 zeigt ein Beispiel für eine Verpackungsmaschine 1, die, wie im vorliegenden Beispiel, eine Schalenverschließmaschine sein kann. Sie kann ein Gestell 2 umfassen. Die Verpackungsmaschine 1 kann des Weiteren ein Zuführband 7 aufweisen. Sie kann außerdem eine Siegelstation 9 aufweisen. Durch das Zuführband 7 können befüllte aber zu diesem Zeitpunkt noch unverschlossene Behälter 4 zu der Siegelstation 9 befördert werden. Jeder der Behälter 4 kann jeweils eine Öffnung 6 aufweisen. Die Öffnung 6 kann dazu konfiguriert sein, ein Befüllen des Behälters 4 mit einem Produkt 16 (s. Figur 2) zu ermöglichen und/oder zu unterstützen. Der Behälter kann des Weiteren einen Flansch 8 (s. Figur 2) aufweisen. Der Flansch 8 kann um die Öffnung 6 herum umlaufend vorgesehen sein. Der Flansch 8 kann dazu konfiguriert sein, mit der Deckfolie 5 verbunden zu werden, bspw. mit dieser verschweißt zu werden.

Die Behälter 4 können mit einer Greifereinrichtung 11 in einer Produktionsrichtung P in die Siegelstation 9 umgesetzt werden. Dort können die Behälter 4 mit einer von oben zugeführten Deckfolie 5 (Folie) verschlossen werden, z. B. durch Ansiegeln der Deckfolie 5. Bspw. kann durch die Deckfolie 5 die Öffnung 6 des Behälters 4 abgedeckt werden. Zu diesem Zweck kann die Siegelstation 9 ein Siegelwerkzeug 10 umfassen, das später noch näher beschrieben werden wird. Die derart fertiggestellten Verpackungen 14 können über die Greifereinrichtung 11 aus der Siegelstation 9 auf ein Abführband 15 umgesetzt werden.

Nach dem Ansiegeln der Deckfolie 5 können den Verpackungen 14 bzw. Verpackungsverbünden entsprechende Bereiche der Deckfolie 5 in der Siegelstation 9 aus der Bahn der Deckfolie 5 ausgeschnitten werden. Es verbleibt ein Folienrestgitter der Deckfolie 5, welches mit einer Vorrichtung 3 zum Aufwickeln der Folie 5 aufgewickelt wird.

In Figur 2 ist das Siegelwerkzeug 10 in einer Schnittansicht zu sehen. Wie im gezeigten Ausführungsbeispiel kann das Siegelwerkzeug 10 ein Werkzeugoberteil 12 und ein Werkzeugunterteil 13 umfassen. Diese können in einer Schließrichtung S aufeinander zu bewegt werden, um so das Siegelwerkzeug 10 zu schließen. In Figur 2 ist das Siegelwerkzeug 10 in einer geöffneten Anordnung dargestellt. Das Siegelwerkzeug 10 kann des Weiteren eine Siegelplatte 17 umfassen. Die Siegelplatte 17 kann beheizbar sein. Z. B. kann das Siegelwerkzeug 10 ein Heizelement 18, z. B. ein Widerstandsheizelement, umfassen. Das Heizelement 18 kann bspw. in oder an der Siegelplatte 17 angeordnet sein.

Die Siegelplatte 17 kann dazu konfiguriert sein, die Deckfolie 5 durch Wärmeeinwirkung mit dem Behälter 4 zu verbinden. Die Siegelplatte 17 kann eine Siegelfläche 19 aufweisen. Das Siegelwerkzeug 10, bspw. das Werkzeugunterteil 13, kann dazu konfiguriert sein, durch Schließen des Siegelwerkzeugs 10 den Behälter 4, bspw. den Flansch 8, gegen die Siegelfläche 19 zu drücken. Die Siegelfläche 19 kann eine Form und/oder Kontur aufweisen, welche einer Form und/oder Kontur des Flansches 8 entspricht. Durch den Wärmeeintrag von der aufgeheizten Siegelplatte 17 können die Deckfolie 5 und der Behälter 4 miteinander verschweißt werden.

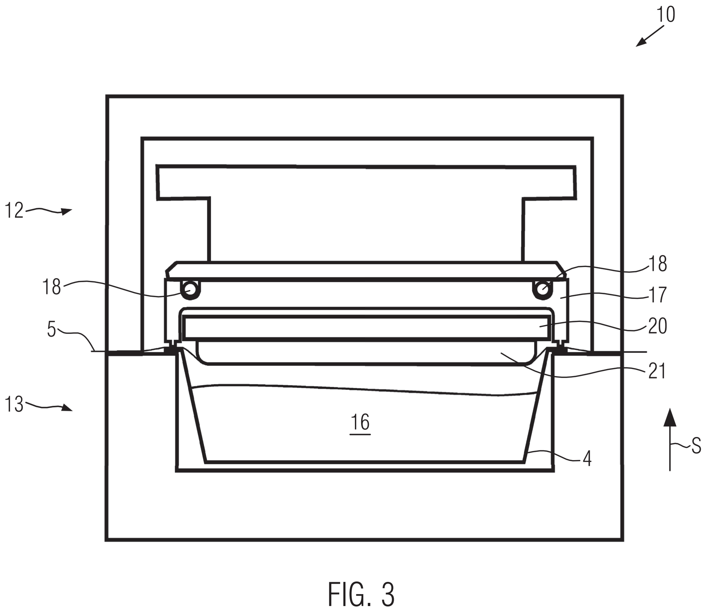

Das Siegelwerkzeug 10, bspw. das Werkzeugoberteil 12, kann des Weiteren eine Produktschutzplatte 20 umfassen. Die Produktschutzplatte 20 kann dazu konfiguriert sein, Bereiche der Deckfolie5 und/oder des Behälters 4 und/oder des Produkts 16 von der Wärmestrahlung der aufgeheizten Siegelplatte 17 abzuschirmen. Die Produktschutzplatte 20 kann des Weiteren dazu konfiguriert sein, die Deckfolie 5 wenigstens teilweise in die Öffnung 6 hinein zu wölben (s. Figur 3). Die Produktschutzplatte kann einen Vorsprung 21 aufweisen. Die Produktschutzplatte kann über die Siegelfläche 19 hinausragen, wie in Figuren 2 und 3 zu erkennen ist. Wie darüber hinaus in Figur 3 zu erkennen ist, kann die Produktschutzplatte 20, bspw. der Vorsprung 21 dazu konfiguriert sein, die Deckfolie 5 in die Öffnung 6 des Behälters 4 hinein zu wölben, vorzugsweise in einem geschlossenen Zustand des Siegelwerkzeugs 10.

## Patentansprüche

1. Siegelwerkzeug (10) zum Versiegeln von Verpackungen (14) durch Verbinden einer Deckfolie (5) mit einem Behälter (4), wobei das Siegelwerkzeug (10) ein Werkzeugunterteil (13) und ein Werkzeugoberteil (12) umfasst, wobei das Werkzeugoberteil (12) eine beheizbare Siegelplatte (17) und eine Produktschutzplatte (20) umfasst, wobei die Siegelplatte (17) dazu konfiguriert ist, die Deckfolie (5) an den Behälter (4) zu siegeln, und wobei die Produktschutzplatte (20) dazu konfiguriert ist, die Deckfolie (5) wenigstens teilweise in eine Öffnung (6) des Behälters (4) hinein zu wölben.

2. Siegelwerkzeug nach Anspruch 1, wobei die Produktschutzplatte (20) dazu konfiguriert ist, die Deckfolie (5) in eine Öffnung (6) des Behälters (4) hinein zu wölben bevor die Deckfolie (5) mit dem Behälter (4) verbunden wird.

3. Siegelwerkzeug nach Anspruch 1 oder 2, wobei die Produktschutzplatte (20) einen Vorsprung (21) aufweist, der dazu konfiguriert ist, die Deckfolie (5) wenigstens teilweise in die Öffnung (6) des Behälters (4) hinein zu wölben.

4. Siegelwerkzeug nach einem der vorangehenden Ansprüche, wobei die Produktschutzplatte (20) und/oder der Vorsprung (21) um mindestens 1 mm über eine Siegelfläche (19) der Siegelplatte (17) hinausragt.

5. Siegelwerkzeug nach einem der vorangehenden Ansprüche, wobei die Produktschutzplatte (20) und/oder der Vorsprung (21) um höchstens 20 mm über eine Siegelfläche (19) der Siegelplatte (17) hinausragt.

6. Verpackungsmaschine (1) mit einer Siegelstation (9), wobei die Siegelstation (9) ein Siegelwerkzeug gemäß einem der vorangehenden Ansprüche umfasst.

7. Verfahren zum Betreiben eines Siegelwerkzeugs gemäß einem der Ansprüche 1 bis 5 oder zum Betreiben einer Verpackungsmaschine gemäß Anspruch 6, wobei das Verfahren umfasst:
Siegeln der Deckfolie (5) an den Behälter (4) ohne vorheriges Evakuieren des Behälters (4) und/oder des Siegelwerkzeugs (10).

8. Verfahren zum Betreiben eines Siegelwerkzeugs (10) gemäß einem der Ansprüche 1 bis 5 oder zum Betreiben einer Verpackungsmaschine gemäß Anspruch 6, wobei das Verfahren umfasst:
Abwarten einer Wartezeit zwischen einem Wölben der Deckfolie (5) in den Behälter (4) hinein durch die Produktschutzplatte (20) und einem Siegeln der Deckfolie (5) an den Behälter (4).

9. Verfahren zum Betreiben eines Siegelwerkzeugs (10) gemäß einem der Ansprüche 1 bis 5 oder zum Betreiben einer Verpackungsmaschine gemäß Anspruch 6, wobei das Verfahren umfasst:
Siegeln der Deckfolie (5) an den Behälter (4) während die Deckfolie (5) wenigstens teilweise in die Öffnung (6) des Behälters (4) hinein gewölbt ist.
